# EUROPEAN PATENT SPECIFICATION

(11) **EP 3 040 189 B1**
(45) Date of publication and mention of the grant of the patent: **26.12.2018**
(21) Application number: 15189367.4
(22) Date of filing: 12.10.2015
(51) Int. Cl.: B29C 70/68, B29C 71/00, A41D 19/00, B29L 31/48, B29C 59/02

(54) **WORK GLOVE AND METHOD OF FABRICATING THE SAME**
ARBEITSHANDSCHUH UND VERFAHREN ZU DESSEN HERSTELLUNG
GANT DE TRAVAIL ET SON PROCÉDÉ DE FABRICATION

(30) Priority: 30.12.2014 KR 20140194411
(43) Date of publication of application: 06.07.2016
(73) Proprietor: Shin Sung Major Glove Co., Ltd., Jeollanam-do 57927 (KR)
(72) Inventor: Kang, Young-Choon, 57919 Suncheon-si, Jeollanam-do (KR); Kang, Min Sung, 57930 Suncheon-si, Jeollanam-do (KR); Kim, Soo Hwan, 58017 Suncheon-si, Jeollanam-do (KR)
(74) Representative: Müller Verweyen

(56) References cited:
- EP-A1- 2 143 551
- EP-A2- 2 614 733
- EP-A2- 2 727 483
- WO-A1-2005/002375
- CN-A- 102 397 833
- FR-A- 1 565 893
- KR-A- 20130 131 711

## Description

### BACKGROUND OF THE INVENTION

### 1. Field of the Invention

The present invention relates to a work glove and a method of fabricating the same, and more particularly to a work glove, capable of preventing slip and improving wearability by using waterborne polyurethane dispersion foam and halite, and a method of fabricating the same.

### 2. Description of the Related Art

In general, work gloves are used to protect hands of workers manually working or to prevent products from being contaminated at rural areas, home, various construction sites and various factories.

The work gloves are fabricated by weaving various types of yarn according to use purposes. Typically, the work gloves are fabricated using polyester yarn having the form of staple yarn, nylon yarn, cotton yarn, or aramid yarn. However, the work gloves fabricated by weaving the above fiber are not suitable for handling objects because the work gloves may easily cause workpieces to slip out of the hand of the worker.

Accordingly, there have been suggested methods of forming a rubber coating layer on a surface of a work glove in order to enhance slip resistance of the work glove.

As one of the methods, there is a method of coating wet polyurethane resin to a work glove to fabricate the work glove. The work glove has excellent wearability due to the characteristic of a micro-porous thin film. However, since the work glove is fabricated by forming pores in a coating layer through the substitution of water with N, N'-Dimethylformamide (DMF), the DMF may continuously remain on a product. Accordingly, harmful reaction may be made with respect to a human body or an environment, and the investment of excessive production cost is required to dispose wastewater resulting from the fabricating process. In addition, since the sizes of the pores may be varied depending on the concentration of the DMF in a coagulation bath when the work glove is fabricated, the products may have different physical properties. In addition, when the work glove is stored for a long time, the work glove may be defected due to the yellowing of the coated resin.

In addition, synthetic rubber gloves fabricated by foaming and vulcanizing latex (NR, NBR (nitrile butadiene rubber) are agitated at a high speed to be fabricated in the form of a foam, so that air-permeability and wearability may be improved. However, external contaminants may be easily introduced into the gloves due to the large pores. In addition, since a coagulant (calcium chloride or calcium nitrate) must be inevitably cleaned, wastewater may be produced. Further, since the vulcanizing process is required, the fabricating process may be prolonged.

Meanwhile, there are reports on the development of gloves by adding a physical/chemical foaming agent to resin having the water dispersion form or by performing a mechanical foaming process using a high-price homo-mixer. However, in the case of the physical/chemical foaming process, a low-temperature volatile solvent serving as a typical core material is used together with a physical foaming agent having the form of a microcapsule including a spherical thermoplastic polymer film or a microsphere and a chemical foaming agent, such as azodicarbonamide (ADCA) or benzenesulfonylhydrazide (BSH). However, the uniformity of the foaming may be deteriorated and the problem of surface migration may be caused. In particular, a material, such as nylon and dyneema, used for a glove may be aged due to the decomposition temperature of 150 °C or more of the foaming agent.

In other words, a rubber coating layer is formed on the surface of a work glove by dipping the work glove into a rubber coating liquid including urethane or PVC for a predetermined time, withdrawing the work glove from the rubber coating liquid, and drying the work glove. Frictional force is generated with respect to an object to be gripped by the rubber coating layer to prevent the object from slipping. However, since the rubber coating liquid used in the rubber coating layer has weak chemical resistance, the use range of the rubber coating layer is restricted. In addition, since the rubber coating layer has a weak adhesive property, the rubber coating layer may be easily cracked. Further, since the rubber coating layer is thick and rough, the grip function may be degraded.

If the work glove is fabricated through a simple dipping way, the coating liquid is deeply introduced into the gloves, so that the wearability of the glove may be deteriorated, and the gripping performance of the gloves may be deteriorated due to the thick coating layer. In an industrial site, such as an auto repair shop, to handle machine or parts stained with oil, the slip of a workpiece may be caused due to the rubber coating layer that is smoothly formed, which may occur in the use of the work glove.

Technical examples to solve the above problems are disclosed in Korean Patent Registration No. 10-1083074 (issued on Nov. 07, 2011, patent document 1) and Korean Patent Registration No. 10-0988075 (issued on Oct. 08, 2010, patent document 2).

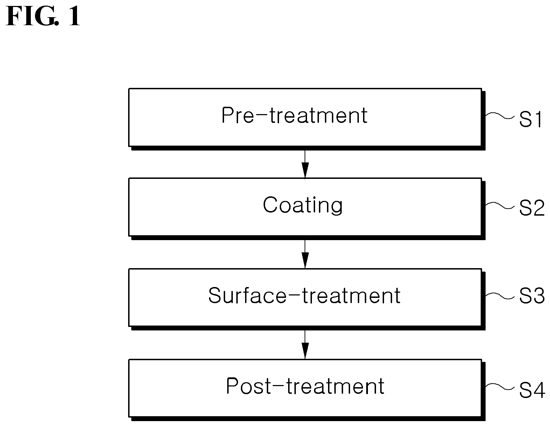

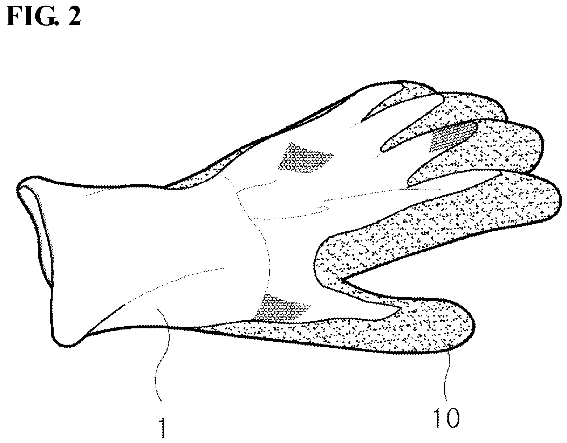

For example, the patent document 1 discloses a method of fabricating a work glove 1 having a rubber coating layer 10 prepared by including pre-treatment step (S1) of putting the work glove 1 on a mold, dipping the work glove 1 into pre-treatment solution having a calcium salt concentration of 12 mol% to 17 mol% for 2 sec. to 5 sec., and drying the work glove, coating step (S2) of dipping the work glove dried in the pre-treatment step (S1) into coating liquid including NBR resin serving as a main material for 5 sec. to 10 sec., and disposing a remaining portion of the coating liquid to coat rubber on the work glove, surface-treatment step (S3) of applying surface-treatment powders including sodium glutamate, sugar, and a low-temperature chemical foaming agent to the surface of the work glove coated with the rubber, and drying the work glove at a normal temperature to perform the surface-treatment of the work glove, and post-treatment step (S4) of cleaning the work glove subject to the surface-treatment, drying the work glove at the temperature of 120 °C to 135°C, and releasing the work glove from the mold as shown in FIGS. 1 and 2.

The patent document 2 discloses a foamed glove coated with a waterborne polyurethane dispersion foam, and the foamed glove includes a glove, a coagulant layer formed by primarily coating an acid solution onto the surface of the glove, and a foam layer formed mechanically foaming mixed liquid, which includes anionic waterborne polyurethane dispersion foam, at least one of fluorine and wax serving as a waterproof agent, a foam control agent, a foaming agent, a thickener, a surface control agent, and a colorant, into the primarily coated surface.

However, as described above, according to the related art, in order to provide the surface roughness of a work glove, larger particles having the particle size of 600 µm to 900 µm are coated onto the work glove. Accordingly, the coated portion of the work glove may be cracked during the use thereof.

In addition, as described above, according to the present invention, although the work glove is suitable for the use in construction sites and factories, the work glove may cause environmental pollution problems if the work glove is used at rural areas or at home. In addition, the surface roughness is excessively formed on the glove, so that the glove cannot be used for a delicate work.

EP 2 143 551 A1 discloses a method for forming a resin surface of a glove exhibiting a non-slip effect and flexibility. Recessed portions different in size are formed randomly within the resin surface. The method includes the steps of: forming first recessed portions by allowing all or some granular and/or powdery adhering material to adhere to a surface of an unset resin composition containing air bubbles in a state where all or some granular and/or powdery adhering material bite into the surface and by removing the adhesive materials after the resin composition is set; and forming second recessed portions smaller than the first recessed portions in size by allowing the air bubbles contained in the unset or set resin composition to open on a surface side of the resin composition.

FR 1 565 893 A2 discloses a process for the preparation of a porous sheet material which comprises coating a solution in a water-miscible organic solvent of a polyurethane onto a surface of a fibrous base or a film forming plate.

### SUMMARY OF THE INVENTION

The present invention is made to solve the problems occurring in the related art, and an object of the present invention is to provide a work glove, which is useful at a rural area or home by solving an environmental pollution problem, and a method of fabricating the same.

Another object of the present invention is to provide a work glove, which can be prevented from being cracked even in long-term use, and a method of fabricating the same.

Still another object of the present invention is to provide a work glove, which can be maintained with a smooth texture while preventing slip at a coated portion, and a method of fabricating the same.

In order to accomplish the objects, there is provided a method of automatically fabricating a work glove by mounting a glove in a mold as defined in claim 1. The method including (a) preparing pre-treatment solution consisting of methanol and a calcium nitrate or methanol and an acid-based material, (b) depositing the glove into the prepared pre-treatment solution and drying the glove, (c) coating resin on a portion of a surface of the dried glove, and (d) applying a surface-treatment powder to the coated portion of the glove and drying the coated portion of the glove. The surface-treatment powder includes halite having a rectangular shape, and one side of the halite has a length in a range of 90 µm to 170 µm.

In addition, the prepared pre-treatment solution may be mixed liquid having 100 kg of the methanol and 1.5 kg to 3 kg of the calcium nitrate mixed with each other or mixed liquid having 100 kg of the methanol and 2 kg to 5 kg of the acid-based material mixed with each other.

Further, in the depositing of the glove into the prepared pre-treatment solution, the glove is deposited into the mixed liquid for 2 second to 5 second such that water-soluble calcium is infiltrated into fiber of the glove and withdrawn from the mixed liquid.

Further, the resin includes a waterborne polyurethane dispersion foam, and the coating of the resin on the portion of the surface of the dried glove is achieved by dipping the portion of the surface of the dried glove into the resin.

In addition, in the coating of the waterborne polyurethane dispersion foam, the waterborne polyurethane dispersion foam may have a volume increased by 15% to 30% of an initial volume thereof, and viscosity in a range of 0.4 Pa.s (400 CPS) to 0.8 Pa.s (800 CPS) through a foam agitator.

In addition, the method further includes (e) cleaning the glove, which is dried in the step (d), using air bubbles having a temperature in a range of 40 °C to 60 °C, and (f) dipping the glove, from which the halite is cleaned, into neutralization liquid, which is formed by dissolving sodium bicarbonate in water, such that the remaining calcium nitrate and acid-based material included in the pre-treatment solution are neutralized. The drying of the coated portion of the glove is performed by hot air having a temperature in a range of 80 °C to 100 °C for time in a range of 10 minutes to 15 minutes.

The applying of the surface-treatment powder to the coated portion of the glove is performed through spraying.

In order to accomplish the above object, there is provided a work glove fabricated by the method mentioned before.

As described above, in the work glove and the method of fabricating the same according to the present invention, the environmental pollution problem can be solved and the wearability can be improved using the waterborne polyurethane dispersion foam, so that the work glove can be used even at the rural areas and home.

Further, in the work glove and the method of fabricating the same according to the present invention, since the halite powders having one side length of 90 µm to 170 µm are employed as the surface-treatment powders, the coated portion cannot be prevented from being cracked even in long-term use, slip can be prevented, and the smooth texture can be maintained, so that the work glove can be used for the delicate work.

### BRIEF DESCRIPTION OF THE DRAWINGS

FIG. 1 is a flowchart showing the sequence of a method of fabricating a work glove according to the related art.
FIG. 2 is a view showing the work glove fabricated according to the method of fabricating the work glove shown in FIG. 1.
FIG. 3 is a flowchart to explain a method of fabricating a work glove according to the present invention.
FIG. 4 is a photograph showing a step of depositing the glove into mixed liquid in FIG. 3.
FIG. 5 is a photograph showing a step of coating the glove with a waterborne polyurethane dispersion foam in FIG. 3.
FIG. 6 is a photograph showing a step of applying powders to the waterborne polyurethane dispersion foam in FIG. 3.
FIG. 7 is a photograph showing a step of cleaning the glove using air bubbles in FIG. 3.
FIG. 8 is an enlarged photograph showing the structure of powders for surface treatment according to the present invention.
FIG. 9 is an enlarged photograph showing the structure of surface-treatment powders according to the related art.
FIG. 10 is an enlarged photograph showing the surface of the work glove fabricated according to the present invention.
FIG. 11 is an enlarged photograph showing the surface of one example of a work glove according to the related art.
FIG. 12 is an enlarged photograph showing another example of a work glove fabricated according to the related art.

### DETAILED DESCRIPTION OF THE INVENTION

The above and other objects and features of the present invention will be more apparent from the description of the specification and the accompanying drawings.

Hereinafter, the configuration of the present invention will be described with reference to accompanying drawings.

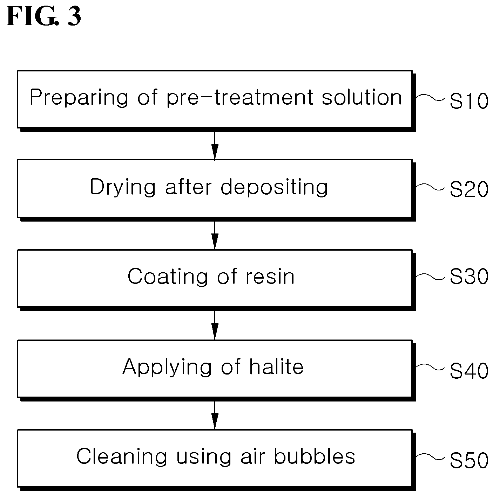

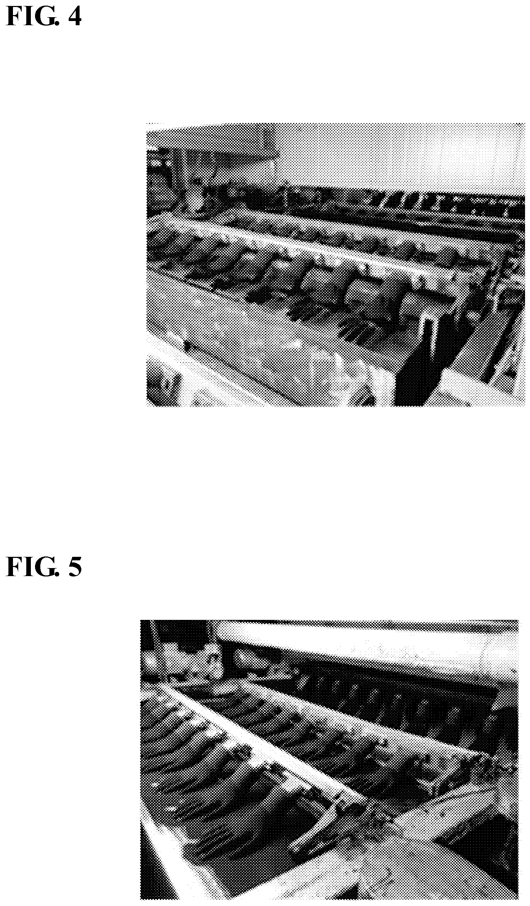

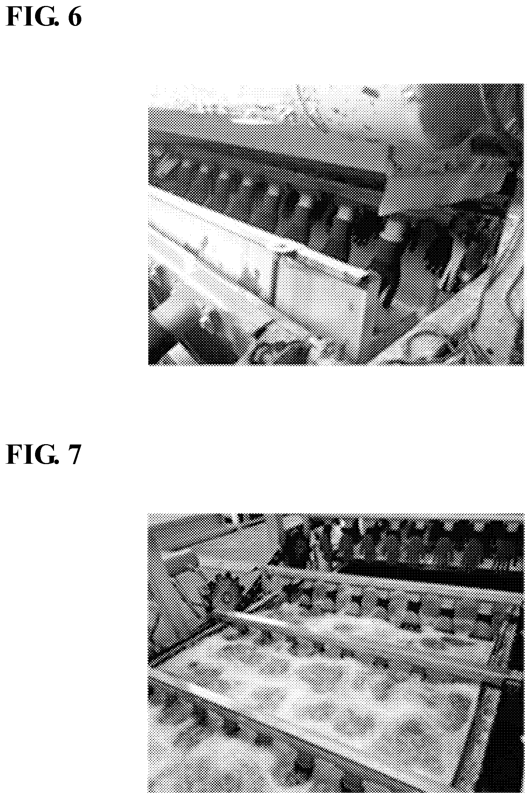

FIG. 3 is a flowchart to explain a method of fabricating a work glove according to the present invention. FIG. 4 is a photograph showing a step of depositing a glove into mixed liquid in FIG. 3. FIG. 5 is a photograph showing a step of coating the glove with waterborne polyurethane foam resin in FIG. 3. FIG. 6 is a photograph showing a step of applying powders to the waterborne polyurethane dispersion foam in FIG. 3. FIG. 7 is a photograph showing a step of cleaning the glove using air bubbles in FIG. 3.

As shown in FIG. 3, according to the method of fabricating the work glove of the present invention, pre-treatment solution consisting of methanol and a calcium nitrate is prepared (step S10).

The pre-treatment solution is prepared as mixed liquid having 100 kg of the methanol and 1.5 kg to 3 kg of the calcium nitrate mixed with each other. If less than 1.5 kg of the calcium nitrate is mixed 100 kg of the methanol, coating liquid cannot be prevented from being infiltrated into the glove, and the infiltration and coagulation speed may be decreased. If more than 3 kg of the calcium nitrate is mixed with 100 kg of the methanol, the coating liquid is excessively rapidly hardened after a coating process, so that a coating layer may be cracked to be separated from the glove, and the powders applied in the surface treatment step may not sufficiently stick to the glove.

However, the present invention is not limited thereto, but various acid-based materials, such as formic acid, acetic acid, and malic acid, may be mixed in the range of 2 kg to 5 kg with 100 kg of the methanol for the use of the mixed liquid.

Next, after putting the glove on a mold, the glove is deposited in the pre-treatment solution, which is the mixed liquid, for several times (e.g., 2 sec. to 5 sec.) and dried as shown in FIG. 4 (step S20).

The glove may be a typical work glove fabricated with cotton yarn, polyester yarn, nylon yarn, or aramid yarn, and may be a glove fabricated using other several synthetic fibers. In this case, as shown in FIG. 4, the glove is treated in the state that the glove is put on the mold, such as a hand-shaped mold, which is used when the surface of a typical glove is coated.

Step S20 is performed to absorb calcium (Ca) into the fiber of the glove in order to minimize the infiltration of the coating liquid into the glove in the coating step to be described later while more rapidly hardening the coating liquid. To this end, a remaining liquid disposal section is provided so that the weight of the mixed liquid consisting of the methanol and the calcium nitrate, which is contained in an inner skin of the glove, is maintained in the range of about 18 g to 24 g. As described above, according to the present invention, the time of about 1 min., 50 sec. is required until the coating step comes after the pre-treatment solution is deposited.

As described above, water-soluble calcium is infiltrated into the fiber of the glove by depositing the glove in the mixed liquid for 2 sec. to 5 sec., and drawing the glove so that the weight of the glove is maintained in the range of about 18 g to about 24 g. Then, moisture contained in the pre-treatment solution is evaporated from the glove by drying the glove after the glove has been deposited as described above, so that a water-soluble calcium salt exists in the infiltrated state within the fiber of the glove.

In addition, preferably, the drying process in step S20 is performed by hot air having the temperature of 40°C to 50°C for the automation of the drying to evaporate the moisture of the glove. As the hot air drying is performed, an amount of moisture contained in the glove is decreased to minimize the process failure rate, and to reduce the drying time of the glove. In this case, although the drying time is varied depending on the temperature of the hot air, the drying time is preferably in the range of 10 min. to 15 min.

In addition, since the temperature of the mold is increased as the drying step is progressed, natural drying may be performed for 10 min. to 15 min. at a normal temperature in order to prevent the coating liquid from being significantly rapidly hardened to be cracked due to heat in the coating step.

Subsequently, as shown in FIG. 5, a portion of the surface of the glove dried in step S20 is coated with resin (step S30).

Preferably, a waterborne polyurethane dispersion foam serving as the resin used in step S30 has the volume increased by 15% to 30% of the initial volume thereof, and the viscosity of 0.4 Pa.s (400 CPS) to 0.8 Pa.s (800 CPS) through a foam agitator.

In step S30, to prevent the coating liquid from being infiltrated into the glove, after the glove prepared in step S20 is dipped into the waterborne polyurethane dispersion foam for about 5 sec. to 10 sec., a remaining portion of the waterborne polyurethane dispersion foam is disposed. Preferably, when the remaining portion of the waterborne polyurethane dispersion foam is disposed, the moving down speed of the mold is not considered, but the moving up speed of the mold is slowly made to adjust the flowing of the waterborne polyurethane dispersion foam so that the waterborne polyurethane dispersion foam does not flow after the coating step.

In step S30, if the viscosity of the waterborne polyurethane dispersion foam is less than 0.4 Pa.s (400 CPS), an amount of the waterborne polyurethane dispersion foam coated on the glove is lowered, and, if the viscosity of the waterborne polyurethane dispersion foam is more than 0.8 Pa.s (800 CPS), the waterborne polyurethane dispersion foam may not be uniformly coated on the glove as the viscosity of the waterborne polyurethane dispersion foam is increased.

The waterborne polyurethane dispersion foam can be easily purchased on the market for the use thereof. The waterborne polyurethane dispersion foam may be substituted with an eco-friendly resin, provided that the resin includes a waterborne polyurethane dispersion foam. In other words, according to the present invention, when the glove is used for home use, the glove may be coated with the eco-friendly resin if the glove has a waterproof function.

In addition, eco-friendly pigments are added to the waterborne polyurethane dispersion foam, so that the coated portion of the glove may have different colors. For example, when water-based pigments, such as black pigments, yellow pigments, blue pigments, green pigments, and red pigments, are mixed with the coating liquid and coated on the glove, color coating can be achieved corresponding to the color of the pigments.

After the step S30 has been finished, as shown in FIG. 6, the mold is rotated at 270° in the state that the resin does not flow, and powders for the surface treatment are applied to the glove for time between about 20 sec. and 40 sec. before an outer surface of the resin coated on the glove is coagulated (hardening), that is, before the powders are treated after the coating step (step S40). The application of the powders to the glove is performed by an air blower.

According to the present invention, halite powders having a substantially rectangular shape are used as powders for the surface treatment.

The halite has a chemical composition of NaCl, has a cube-shaped or octahedral-shaped crystal, and mainly has a massive or granular aggregate. The halite has the thickness of 1.5, and the specific gravity of 2.1 to 2.6, and has the perfect cleavage at the [100] plane. Most halites are colorless and transparent, and some halites represent yellow, red, blue, and purple. The halite mainly contains impurities, such as magnesium sulfate or magnesium chloride, and represents deliquescent. As sea water or a saline lake is evaporated, the halite is extruded to form a large-scale deposit.

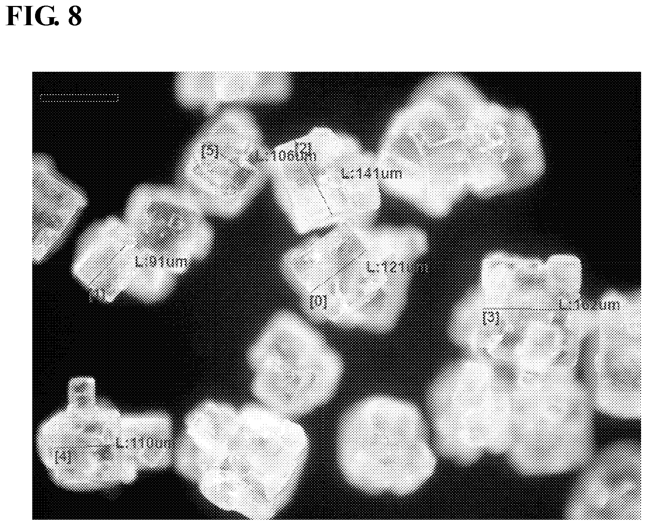

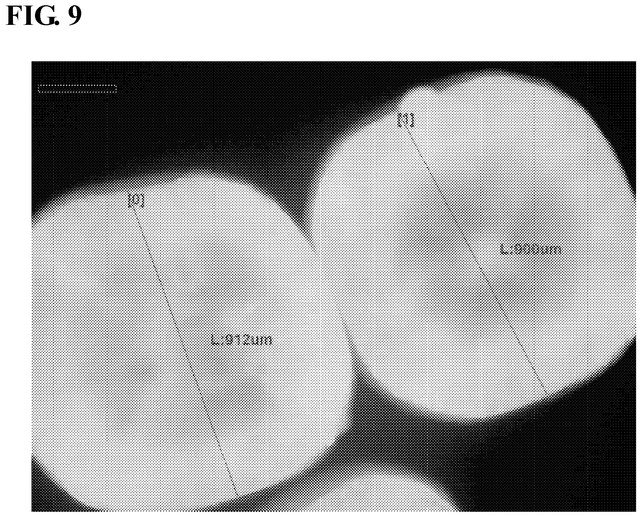

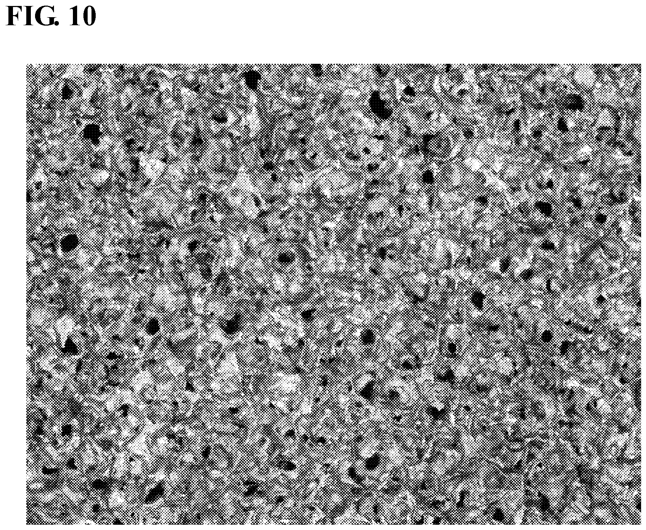

In the size of the powder according to the present invention, the length of one side is in the range of 90 µm to 170 µm as shown in FIG. 8. Accordingly, the slip can be prevented and the smooth texture can be maintained. FIG. 8 is an enlarged photograph showing the crystal structure of powders for surface treatment according to the present invention, and FIG. 9 is an enlarged photograph showing the crystal structure of powders for surface treatment according to the related art. FIG. 10 is an enlarged photograph showing the surface of the work glove fabricated according to the present invention.

If the size of the halite is less than 90 µm, the particle size may be excessively small, so that halite powders may not be uniformly applied to the surface of the glove. Accordingly, the slip is only slightly prevented. Meanwhile, if the size of the halite is more than 170 µm, as the particle size is increased, the halite exists in larger size on the coated surface of the glove, so that the glove may have the irregular surface. Similarly to that of the related art, the coated portion of the glove may be cracked in long-term use.

In other words, according to the present invention, the coated portion of the glove can be prevented from being cracked, the slip can be prevented, and the smooth texture can be maintained even in the long-term use by using the halite powders having the particle size smaller than the particle size (900 µm to 1000 µm) of a halite powder according to the related art as shown in FIG. 9.

After the powders have been applied in step S40, the glove is dried for 10 minutes to 15 minutes by hot air having the temperature of about 80°C to 100°C so that the powders and the coated surface may be sufficiently hardened. If the glove is not sufficiently dried, the waterborne polyurethane dispersion foam coated in step S30 may be uncoated and the powders applied in step S40 may be separated from the glove.

The surface-treatment powders in step S40 is uniformly applied to the coated portion of the glove through spraying. Through the drying process, the surface-treatment powders stick onto the coated surface of the glove while making reaction.

After the surface treatment has been finished in step S40, the glove subject to the surface treatment is cleaned using air bubbles (step S50) as shown in FIG. 7.

In other words, according to the present invention, since halite powders are used, an air bubble pipe is installed and water of 50°C is used so that the halite powders can be cleaned by air bubbles, because the halite powders in the coated surface may no be clearly cleaned due to the fine size of the halite powders through a typical cleaning process employed in the related art. The above cleaning process is performed in a progressing direction of the mold. When the mold has a two-layer structure or a three-layer structure, the cleaning process is performed by dividing the mold in two sections.

Meanwhile, after step S50, a secondary cleaning process is performed. In addition, neutralization treatment is preferably performed before the secondary cleaning process is performed.

The neutralization treatment is a step to neutralize the calcium nitrate and the acid-based material remaining on the coated surface, and to dip the glove, from which the halite is cleaned, into neutralization liquid, which is formed by dissolving about 3% to about 10% of sodium bicarbonate in water, for 3 sec. to 5 sec. in step S50. Thereafter, the secondary cleaning process is performed. The neutralization treatment can be further performed to prevent coating hardness from being changed by neutralizing the calcium nitrate and the acid-based material remaining on the glove because the coating hardness may be changed after a predetermined time elapses if the calcium nitrate and the acid-based material remain on the work glove.

After the secondary cleaning process has been performed, the glove is dried by the hot air having the temperature of about 130°C for 50 min.

The waterborne polyurethane dispersion foam is completely hardened on the glove through the above hot air drying. After the waterborne polyurethane dispersion foam has been completely dried, the glove is released from the mold, thereby finishing the fabricating of the work glove according to the present invention.

The coated portions of the work glove fabricated according to the present invention and a work glove according to the related art are photographed at a magnification ratio using a scanning electron microscope (SEM) to compare the coated portion of the work glove fabricated according to the present invention with the coated portion of the work glove according to the related art. The photographing results are shown in FIGS. 10 to 12.

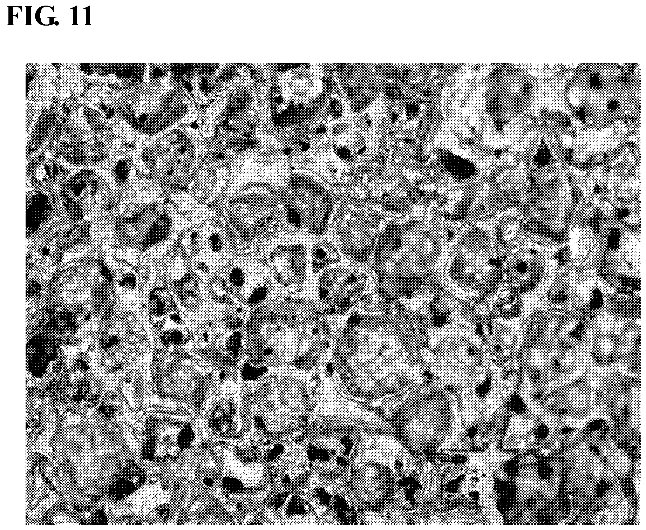

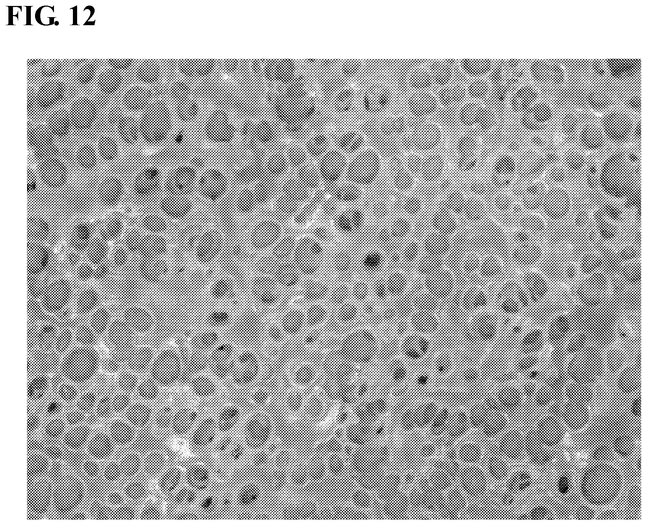

FIG. 10 is an enlarged photograph showing the surface of the work glove fabricated in particle size of 90 µm to 170 µm according to the present invention, and FIG. 11 is an enlarged photograph showing the surface of one example of a work glove fabricated in particle size of 900 µm to1000 µm according to the related art. FIG. 12 is an enlarged photograph showing another example of the work glove fabricated according to the related art.

As recognized through the comparison of FIG. 10 with FIG. 11, the work glove according to the present invention is formed in the surface thereof with fine and uniform recess parts. As shown in FIG. 12, recess parts for a grip function are hardly formed.

Accordingly, the work glove according to the present invention has the grip function and the smooth surface texture to represent improved wearability.

Meanwhile, work gloves shown in FIGS. 10 to 12 are provided for 30 adult men and 30 adult women so that they wear the work gloves to test the wearability and the grip function of the work glove and to evaluate the work gloves by rating the wear sensation and the grip function at high, middle, and low levels. The evaluation results are shown in Tables 1 and 2. Table 1 shows the evaluation results of the work gloves provided for the men, and Table 2 shows the evaluation results of the work gloves provided for the women.

**Table 1**

| | Glove of FIG. 10 | Glove of FIG. 11 | Glove of FIG. 12 |
|---|---|---|---|
| High (m.) | 20 | 18 | 0 |
| Middle (m.) | 8 | 8 | 10 |
| Low (m.) | 2 | 4 | 20 |

**Table 2**

| | Glove of FIG. 10 | Glove of FIG. 11 | Glove of FIG. 12 |
|---|---|---|---|
| High (fem.) | 24 | 6 | 0 |
| Middle (fem.) | 5 | 10 | 15 |
| Low (fem.) | 1 | 14 | 15 |

As recognized through Tables 1 and 2, when the halite powders having one side length of 90 µm to 170 µm are employed as the surface-treatment powders according to the present invention, the grip function is not lowered, but high wearability can be obtained. In addition, when the work glove according to the present invention is used for a woman at home, the work glove according to the present invention has wearability higher than that of the work glove according to the related art.

As the work glove and the method of fabricating the same according to the present invention are used, problems of environmental pollution can be solved. Accordingly, the work glove can be used at a rural area or home.

## Claims

1. A method of automatically fabricating a work glove by mounting a glove in a mold, the method comprising:
(a) preparing pre-treatment solution consisting of methanol and a calcium nitrate or methanol and an acid-based material;
(b) depositing the glove into the prepared pre-treatment solution and drying the glove;
(c) coating resin on a portion of a surface of the dried glove, wherein the resin includes a waterborne polyurethane dispersion foam, and the coating of the resin on the portion of the surface of the dried glove comprises dipping the portion of the surface of the dried glove into the resin;
(d) applying a surface-treatment powder to the coated portion of the glove through spraying and drying the coated portion of the glove,
wherein the surface-treatment powder includes halite having a rectangular shape, and one side of the halite has a length in a range of 90 µm to 170 µm;
(e) cleaning the glove, which is dried together with the surface-treatment powder, using air bubbles having a temperature in a range of 40 °C to 60 °C; and
(f) dipping the glove, from which the halite is cleaned, into neutralization liquid, which is formed by dissolving sodium bicarbonate in water, such that the remaining calcium nitrate and acid-based material included in the pre-treatment solution are neutralized,
wherein the drying of the coated portion of the glove is performed by hot air having a temperature in a range of 80 °C to 100 °C for time in a range of 10 minutes to 15 minutes.

2. The method of claim 1, wherein the prepared pre-treatment solution is mixed liquid, in which 100 kg of the methanol is mixed with 1.5 kg to 3 kg of the calcium nitrate, or mixed liquid in which 100 kg of the methanol is mixed with 2 kg to 5 kg of the acid-based material.

3. The method of claim 2, wherein the depositing of the glove into the pre-treatment solution and the drying of the glove comprise withdrawing the glove from the mixed liquid after depositing the glove into the mixed liquid for 2 second to 5 second such that water-soluble calcium is infiltrated into fiber of the glove.

4. The method of claim 1, wherein the waterborne polyurethane dispersion foam has a volume increased by 15% to 30% of an initial volume thereof, and viscosity in a range of 0.4 Pa·s (400 CPS) to 0.8 Pa·s (800 CPS) through a foam agitator.

5. A work glove fabricated by the method of any one of the preceding claims.

## Patentansprüche

1. Ein Verfahren zur automatischen Herstellung eines Arbeitshandschuhs durch Einbringen eines Handschuhs in eine Form, wobei das Verfahren Folgendes umfasst:
(a) Zubereiten einer Vorbehandlungslösung, bestehend aus Methanol und Calciumnitrat oder Methanol und einem Material auf Säurebasis;
(b) Einlegen des Handschuhs in die zubereitete Vorbehandlungslösung und Trocknen des Handschuhs;
(c) Beschichten eines Teils einer Oberfläche des getrockneten Handschuhs mit Kunststoff, wobei der Kunststoff einen Schaum aus einer wasserbasierten Polyurethandispersion umfasst, und das Beschichten des Teils der Oberfläche des getrockneten Handschuhs mit dem Kunststoff ein Eintauchen des Teils der Oberfläche des getrockneten Handschuhs in den Kunststoff umfasst;
(d)Aufbringen eines Oberflächenbehandlungspulvers auf den beschichteten Teil des Handschuhs durch Besprühen und Trocknen des beschichteten Teils des Handschuhs, wobei das Oberflächenbehandlungspulver Halit enthält, das eine rechteckige Form aufweist, und eine Seite des Halits eine Länge in einem Bereich von 90 µm bis 170 µm aufweist;
(e) Reinigen des Handschuhs, welcher zusammen mit dem Oberflächenbehandlungspulver getrocknet wurde, mithilfe von Luftblasen, die eine Temperatur in einem Bereich von 40°C bis 60°C aufweisen; und
(f) Eintauchen des Handschuhs, von dem das Halit entfernt wurde, in Neutralisierungsflüssigkeit, welche durch das Auflösen von Natriumbicarbonat in Wasser ausgebildet wird, sodass das restliche in der Vorbehandlungslösung enthaltene Calciumnitrat und Material auf Säurebasis neutralisiert werden,
wobei das Trocknen des beschichteten Teils des Handschuhs durch heiße Luft, die eine Temperatur in einem Bereich von 80 °C bis 100 °C aufweist, für einen Zeitraum in einem Bereich von 10 Minuten bis 15 Minuten erfolgt.

2. Das Verfahren nach Anspruch 1, wobei die zubereitete Vorbehandlungslösung ein Flüssigkeitsgemisch, in dem 100 kg des Methanols mit 1,5 kg bis 3 kg des Calciumnitrats gemischt sind, oder ein Flüssigkeitsgemisch, in dem 100 kg des Methanols mit 2 kg bis 5 kg des Materials auf Säurebasis gemischt sind, ist.

3. Das Verfahren nach Anspruch 2, wobei das Einlegen des Handschuhs in die Vorbehandlungslösung und das Trocknen des Handschuhs ein Entnehmen des Handschuhs aus dem Flüssigkeitsgemisch nach dem Einlegen des Handschuhs in das Flüssigkeitsgemisch für 2 Sekunden bis 5 Sekunden umfasst, sodass wasserlösliches Calcium in Fasern des Handschuhs eindringt.

4. Das Verfahren nach Anspruch 1, wobei der Schaum aus der wasserbasierten Polyurethandispersion durch einen Schaumrührer ein Volumen, das um 15 % bis 30 % größer ist als ein Anfangsvolumen davon, und eine Viskosität in einem Bereich von 0,4 Pa·s (400 CPS) bis 0,8 Pa·s (800 CPS) aufweist.

5. Ein Arbeitshandschuh, hergestellt durch das Verfahren nach einem der vorangehenden Ansprüche.

## Revendications

1. Un procédé de fabrication automatisée d'un gant de travail par montage d'un gant dans un moule, ledit procédé comprenant :
(a) la préparation d'une solution de prétraitement composée de méthanol et d'un nitrate de calcium ou de méthanol et d'une substance à base acide ;
(b) le dépôt du gant dans la solution de prétraitement préparée et le séchage du gant ;
(c) le revêtement d'une résine sur une partie d'une surface du gant séché, la résine comprenant une mousse à dispersion aqueuse de polyuréthane, et le revêtement de la résine sur la partie de la surface du gant séché comprenant le trempage de la partie de la surface du gant séché dans la résine ;
(d) l'application d'une poudre de traitement de surface sur la partie de gant revêtue par pulvérisation et séchage de la partie de gant revêtue,
la poudre de traitement de surface comprenant de la halite de forme rectangulaire, et un côté de la halite ayant une longueur comprise entre 90 µm et 170 µm ;
(e) le nettoyage du gant, lequel est séché avec la poudre de traitement de surface, au moyen de bulles d'air dont la température est comprise entre 40 °C et 60 °C ; et
(f) le trempage du gant, nettoyé de la halite, dans un liquide de neutralisation formé par dissolution de bicarbonate de sodium dans l'eau, de manière à neutraliser le nitrate de calcium restant et la substance à base acide contenue dans la solution de prétraitement, le séchage de la partie de gant revêtue étant réalisé par de l'air chaud dont la température est comprise entre 80 °C et 100 °C pendant une durée comprise entre 10 minutes et 15 minutes.

2. Le procédé selon la revendication 1, où la solution de prétraitement préparée est un liquide de mélange où 100 kg de méthanol sont mélangés avec 1,5 à 3 kg de nitrate de calcium, ou un liquide de mélange où 100 kg de méthanol sont mélangés avec 2 à 5 kg de substance à base acide.

3. Le procédé selon la revendication 2, où le dépôt du gant dans la solution de prétraitement et le séchage du gant comprennent le retrait du gant du liquide de mélange après dépôt du gant dans le liquide de mélange pendant 2 à 5 secondes de manière à faire pénétrer le calcium soluble dans l'eau dans les fibres du gant.

4. Le procédé selon la revendication 1, où la mousse à dispersion aqueuse de polyuréthane a un volume augmenté de 15 % à 30 % par rapport à son volume initial, avec une viscosité comprise entre 0,4 Pa·s (400 CPS) et 0,8 Pa·s (800 CPS), par un agitateur de moussage.

5. Un gant de travail fabriqué suivant le procédé selon l'une des revendications précédentes.
